# EUROPEAN PATENT APPLICATION

(11) **EP 1 347 631 A1**
(43) Date of publication of application: **24.09.2003**
(21) Application number: 02100282.9
(22) Date of filing: 21.03.2002
(51) Int. Cl.: H04N 1/52

(54) **Multilevel colour error-diffusion providing reduced sensitivity to printing process variability errors**

(71) Applicant: AGFA-GEVAERT N.V., 2640 Mortsel (BE)
(72) Inventor: Vande Velde, Koen, 2640, Mortsel (BE)

(57) **Abstract**

In multilevel dot matrix colour printing the continuous tone colour image is halftoned obtaining for each colour pixel of the colour image a value combination of multilevel colorant values.

Each value combination is recorded as a colorant pixel which is a combination of colorant dots, substantially in register which sizes relate to the colorant values.

Certain printing process variabilities (e.g. registration errors of the printing apparatus) may cause colour reproduction errors for certain colorant dot combinations.

A solution is provided by excluding value combinations corresponding to unstable colorant dot combinations during halftoning.

## Description

### FIELD OF THE INVENTION

The present invention relates to a solution for reducing colour reproduction errors due to variability of the printing process in reproducing a colour image by dot matrix printing. More specifically the present invention relates to a method for multilevel halftoning in colour dot matrix printing.

### BACKGROUND OF THE INVENTION

### Colour reproduction

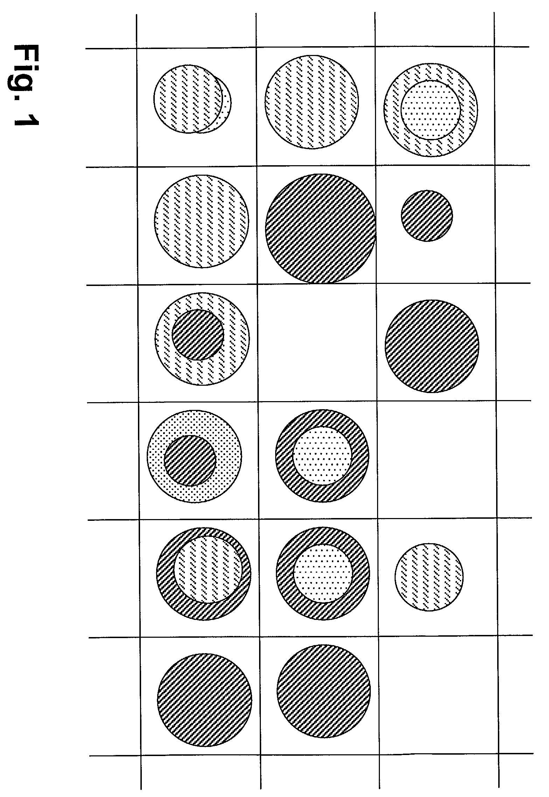

Nowadays a lot of printed matter is produced carrying a reproduction of a colour image. A large part of these colour prints are produced using offset printing but in office and home environment a lot of colour prints are made using relatively small printing apparatuses. Possible types of printers are typically laser printers using an electrographic process, thermal printers and inkjet printers.
The majority of these printing apparatuses use dot matrix printing techniques wherein "colorant" combinations of colorant dots are printed on top of each other on a substrate in ordered geometry. A detail of an obtained image is depicted in Fig. 1.

Older printers were only capable of recording one type or size of dot, a dot of colorant was either absent or present. These types use so-called binary printing processes.
Recently apparatuses are capable of reproducing several sizes or densities of dots for each colorant. Such a printer uses a multilevel process. An example of this type of printer is an inkjet printer capable of jetting drops of different sizes or a variable number of drops on to of each other onto a substrate resulting in different dot sizes as shown in Fig. 1.

When reproducing an image delivered by e.g. a computer system on a printer using dot matrix printing the resolution of the image, i.e. the number of pixels in the image per millimetre, which is expressed in dots/mm (dots/inch = dpi), is usually first brought to the level of the addressability of the printing device usually expressed in dots/mm (dots/inch). For an inkjet printer the addressability is related to the nozzle pitch and the number of interlacing printing passes while for a laser printer the addressability is determined by the laser system. The addressablity of an office or home environment printer need not to be the same in the horizontal and vertical direction. A typical resolution of e.g. an inkjet printer can be 96 x 48 dots/mm (2400 x 1200 dpi)
The image having the resolution of the printer's addressability is hereafter called input image and has colour pixels having the size corresponding to the area of the smallest addressable element in the output image.

As can be understood a relatively low resolution image e.g. 4 dots/mm (100 x100 dpi), delivered to the printer is first scaled up to the printers resolution by a suitable interpolation technique and used as input image.
Images can also be delivered in other formats, e.g. PostScript®, to a printer and are composed in the printer itself at the printer's resolution.

Reproducing a colour pixel of an input image is done e.g. in an inkjet printer by printing a colorant pixel which is a colorant combination of colorant dots on top of each other.
In standard inkjet reproduction typically a colour pixel is reproduced by printing a colorant pixel consisting of colorant dots using inks having cyan, magenta, yellow and black colorants. For some reproductions use can be made of less or more types of inks. Reproduction can be done including grey inks having a lower concentration of black colorant and even light cyan, light magenta and other types of ink can be used.
The term colour has to be interpreted in a broad way, A reproduction of a grey scale image using two or more types of ink having different densities (several grey and a black ink) is considered as a colour image. Every different ink can be considered as a different colour.

Opposed to the so-called binary printing processes, that have only two levels per pixel, either a drop of ink or no drop of ink for a pixel, modern multilevel printing processes are able to produce more levels of a colour per colorant pixel.
This can be achieved either by using multiple inks of the same colour, but having different densities (e.g. two magenta and two cyan inks are often used for ink-jet colour printing), or it can be done by producing drops of different sizes ( US patent 4,680,645 by Dispoto et al.). These different droplet sizes are made either by coagulation of small drops in flight before the reach the paper, or just by jetting several small drops on top of each other on a substrate to form a colorant dot.

Also a combination of the two methods (different densities/different drop sizes) is used (US patent 5,975,671 by Spaulding et al.).

For other types of recording processes similar systems can be used including e.g. grey toners etc..

### Halftoning

The input image or image to be reproduced is usually a contone or also called a continuous tone image. This means that the possible colour value and density of each colour pixel can have nearly any value between possible minimum and maximum levels. In this context a continuous tone image can be considered as an image having multiple grey or colour levels, with no perceptible quantisation to them. This means that an observer can not distinguish between successive grey levels or colours. A black and white continuous tone image usually has 256 grey levels which can not be distinguished by a observer. For a colour image 256 levels are available for each colour component.

The number of possible levels for colorant dots forming a colorant pixel representing the colour pixel in an output image is relatively small. This may vary from 2 in a binary system to e.g. 16 in multilevel printing systems.

Before reproduction of a continuous tone image the continuous colour values, possibly measured in RGB space RGB, for each colour pixel of the input image has to be converted to a value combination of the limited number of possible colorant values (CMYK) for forming the colorant dots representing the colour pixel in the output image. This process is called halftoning. Reproduction is afterwards done by printing the colorant dots forming the colorant pixel using the colorant values of the corresponding value combination.

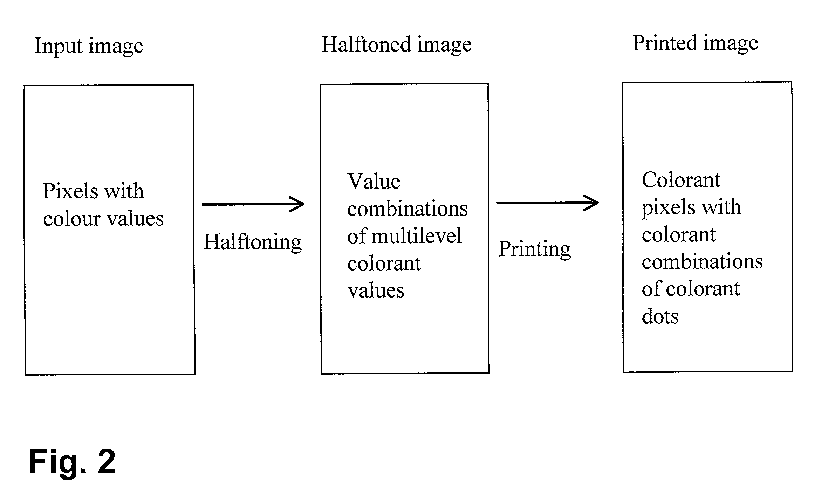

A general representation of the different terms used is given in relation to Fig. 2.
The input image at the resolution of the printer comprises colour pixels having colour values for each colour component, usually determined in the RBG colour space but can also be determined in other colour spaces. By the halftoning process the colour values of the input pixels are processed to certain rules and for each input pixel a value combination of multilevel colorant values is determined. These colorant values are values for the different colorants use to reproduce the input image pixel. The printing process converts these value into physical dots which combination represents the pixel.

For simplicity the colorant value in e.g. an inkjet printer can correspond to the number of ink drops used to form the colorant dot. However more complicated relationships can be used to couple colorant value to printer parameters such as activation time of a print element of a print head, laser on time, temperature of a print element, drop size, etc.. All depending on the printing process used in the printer.

In halftoning one possible type of halftoning is called error diffusion halftoning.

For ink-jet printing, error diffusion is the most adequate algorithm to perform the halftoning, that is to bring the image from its contone state to a electronic image having a printable state.

The basic error-diffusion algorithm works as follows (Floyd and Steinberg: Proceedings of the SID, Vol 17/2, 1976):
The first pixel value of the original image is compared to a threshold to obtain the output pixel value to reproduce the pixel(a dot or no dot). The quantisation error, i.e. the difference between the continuous tone input value and the output pixel value, is diffused to future pixels. This is done by storing the error into a special buffer. For the next pixels we threshold the modified pixel value = (original pixel value + error received from past pixels which is read from the error buffer) to obtain output pixel values and again diffuse the error to future pixels via the error buffer.
This basic error-diffusion algorithm is easily extended to the multilevel case (see e.g. R.S. Gentile et al. J. Opt. Soc. Am. A, vol 7, no. 6, pp. 1019-1026 (1990)) by replacing thresholding by quantisation, and is well-known.

### - Colour error-diffusion

The most straightforward way to extend error diffusion to colour printing is to perform error diffusion on the different colour planes (e.g. Cyan, Magenta, Yellow, Black (C,M,Y,K)) independently. There are however some more sophisticated algorithms correlating the different colour planes (Klassen et al. US patent 5,621,546 , Vande Velde et al. EP application 01000053). They yield a less grainy image by optimising the distribution of the colorant dots.
The input image having colour pixels is halftoned obtaining a halftoned image having corresponding to each pixel a value combination of multilevel colorant values.

As shown Fig. 2 in the second step these value combinations of multilevel colorant values are used by the printing process for producing the colorant pixels of the printed image colorant combinations of colorant dots.

### Process variability

It can be easily understood that the colour reproduction quality when reproducing a colour pixel is thus not only determined by the multilevel halftoning algorithm but also by the printing process parameters and the parameters of the printing apparatus when recording colorant dots using the multilevel colorant values. A lot of these parameters show variability resulting in an instability in colour reproduction.

Some of these variable parameters are :
- variability in colorant dot size due to unstable forming of colorant dots under certain circumstances (dependent on e.g. temperature of the print head) In inkjet this can be caused by unstable forming of ink drops resulting in deviating dot sizes.
- Variability in position of the recorded colorant dots on the substrate due to :
   - registration errors of the print head position mechanism. Mechanisms for positioning print heads always exhibit a certain amount of play or tolerance giving rise to imperfect placement of the recorded colorant dots. Especially older printers may suffer from increasing play in the mechanisms.
   - defects in e.g. inkjet printing head resulting in nozzles placing deviating colorant dots due to fabrication errors. During production of print heads nozzles can have small defects causing deviating positioning of recorded dots. Fabrication of print heads without defects is difficult and costly.
   - deviations in timing of the firing or nozzles or actuation of print elements, especially when using shuttling print heads, can give rise to imperfect placement of the colorant dots.
   - for inkjet : dot placement errors due to air turbulence between print head and substrate affecting speed and direction of the jetted ink drops, possibly dependent on printing speed or shuttling speed of the print head.

### Practical example of a colour instability problem

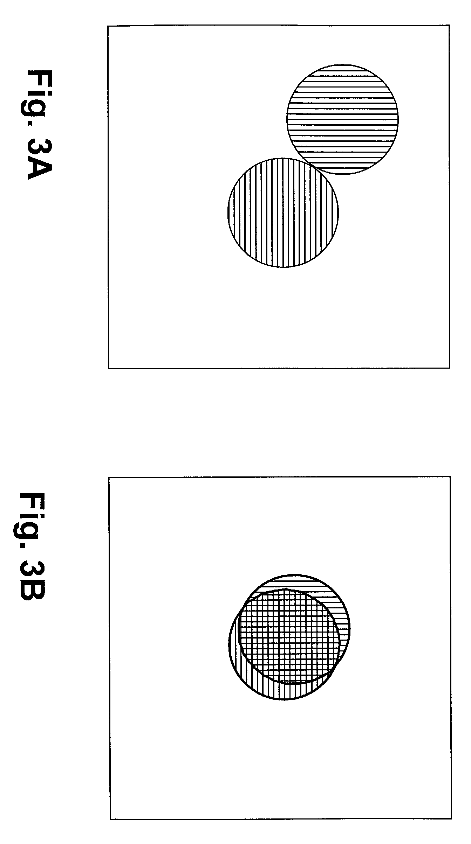

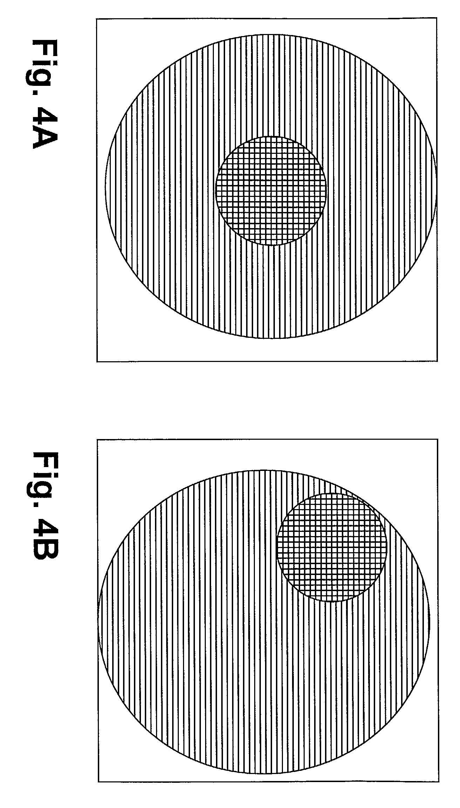

In the case of multilevel printing with multiple dot sizes in an inkjet printing apparatus, there is a higher chance for colour instability due to colour-plane registration errors, because the colorant dots can be much smaller than the pixel size, while the registration error is often of the order of half the pixel size. When we two small colorant dots of different colorants (or different grey level) on the same pixel, we cannot be sure how much the printed dots will overlap. If e.g. a magenta and a cyan dot are placed on the pixel and the dots do not overlap, as shown in Fig. 3A than the pixel colour will be much lighter blue than in the case they do overlap as shown in Fig 3B. This variability in registration is a source of colour instability of our system.
However this problem is not so acute when placing single small colorant dots on a colorant pixel or place a large and a small colorant dot together on a colorant pixel, as illustrated in FIG 4A and 4B. In that case the small dot can change its position significantly before a colour shift takes place.

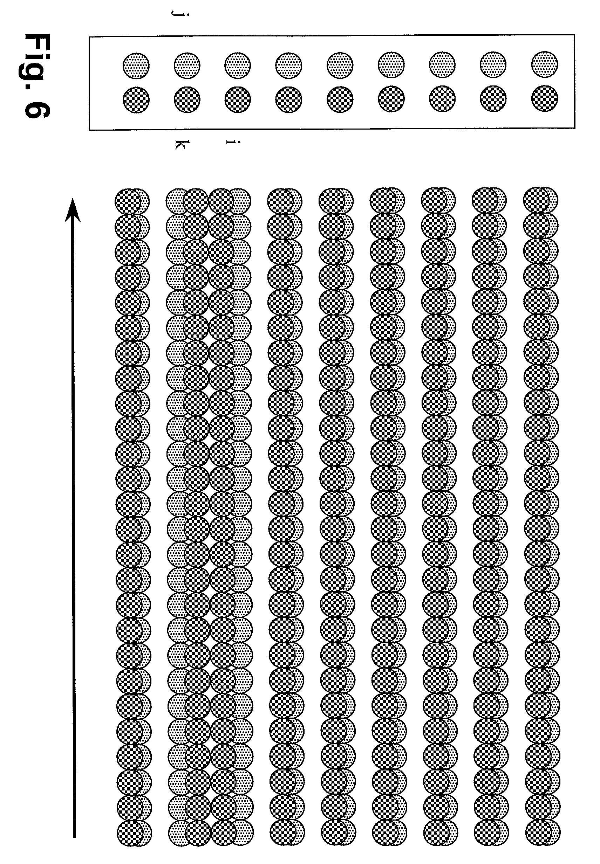

While registration errors due to positioning of the print head occur over the whole width of the print head, defective nozzles causing misregistration are usually location dependent. This can lead to a local colour reproduction deviation spreading over the length of the image as shown in Fig. 6.

Until now no attention has been given in the prior art to the problem of unstable colour reproduction due to printing process variability using multilevel recording processes.
No solution to this problem has been suggested for solving this problem.

### SUMMARY OF THE INVENTION

The above-mentioned advantageous effects are realised by a method having the specific features set out in claim 1. Specific features for preferred embodiments of the invention are set out in the dependent claims.
An apparatus employing the method is set out in claim 10
Further advantages and embodiments of the present invention will become apparent from the following description and drawings.

### BRIEF DESCRIPTION OF THE DRAWINGS

- Fig. 1: shows the result of dot matrix printing.
- Fig. 2: shows the relation between input pixels, colorant values obtained by halftoning and reproduced colorant dots.
- Fig. 3A: shows a print of non overlapping small colorant dots as caused by misregistration.
- Fig. 3B: shows overlapping small colorant dots.
- Fig. 4A: shows an overprint of large and small dot with perfect registration.
- Fig. 4B: shows an overprint of large and small dot with registration error.
- Fig. 5: shows a basic error diffusion scheme according to the present invention.
- Fig. 6: shows the effect of local colour deviations due to nozzles defects in inkjet printing.

### DETAILED DESCRIPTION OF THE INVENTION

By using a halftoning algorithm allowing only value combinations of colorant values corresponding to colorant combinations of colorant dots having no or less susceptibility to colour instability due to process variability, overall colour reproduction quality of an image can be improved. The restriction introduced by the halftoning process avoids unstable colorant dot combinations.
For the ink jet example it is found that by allowing only those combinations corresponding to combinations of ink drops resulting in colorant dots differing significantly in size or having at least a certain size, we can reduce the sensitivity to registration error to that of binary printing.

Of course this is only possible when some correlation between the colour planes is introduced. The risk of ruling out some of the combinations is that we would increase the graininess in the image. Since we are not ruling out the combinations where the multilevel process mostly reduces the graininess (small dots on white background), this trade-off between colour stability and graininess is an acceptable one.
The current invention especially provides a way to perform multilevel colour error-diffusion with reduced sensitivity to colour-plane registration errors, in the case where the multilevel process results in producing dots of different sizes to a substrate. Especially for injket printing this can be advantageous.

Due to a correlation of the different colour planes, it is possible to decide which sizes of colorant dots of different colours may be printed on top of each other and which may not.

The invention gives a way to restrict the printing process in such a way that it rules out the colorant combinations of colorant dots of different colorants that are most sensitive to colour instability.

In the hereinafter described embodiment colorant combinations of colorant dots correspond to value combinations of multilevel colorant values. In the embodiment the colorant value is directly related to the number of drops used to form a colorant dot. The total drop count is the total number of drops used to print all the dots of one pixel in the output image.

### Preferred embodiment of the invention

For a preferred embodiment of our invention used in an inkjet printing apparatus we adapt the method of Vande Velde for correlating the different colour planes in colour error-diffusion.

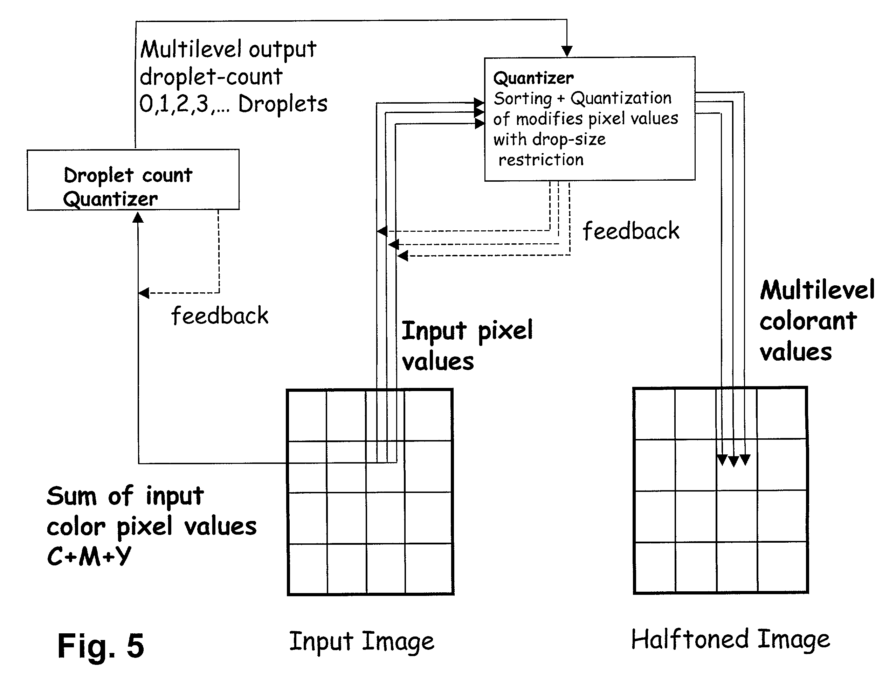

The simplest version of this invention is depicted in Fig. 5. In this preferred embodiment the multilevel colorant value corresponds to the number of droplets that is used to form the colorant dot.
The input colour pixel values of the different colour planes are added together and subjected to a multilevel error-diffusion loop to decide how many droplets are totally to be deposited onto the pixel. In the case of multiple droplet sizes we regard a larger droplet as being formed by more than one small droplet. In the case e.g. where we have two different droplet sizes, the smallest droplet will be counted as one droplet and the largest will be counted as two droplets.

After the output droplet-count has been determined which corresponds to the sum of multilevel colorant values, an error-diffusion loop for the individual colour planes will decide which colour these droplets will have. The two error-diffusion loops are organised in a way that the modified total drop count is equal to the sum of the modified pixel values of the individual colour planes. In this way also the output total drop count is equal to the sum of the output pixel values of the individual colour planes.

We will first elaborate the simple example of printing with two inks I₁ and I₂, each of the inks having two droplet sizes, resulting in the following value combinations:

| Drop count I₁ | Drop count I₂ | Total drop count |
|---|---|---|
| 0 | 0 | 0 |
| 1 | 0 | 1 |
| 0 | 1 | 1 |
| 1 | 1 | 2 |
| 2 | 0 | 2 |
| 0 | 2 | 2 |
| 2 | 1 | 3 |
| 1 | 2 | 3 |
| 2 | 2 | 4 |

Input values for the two colour planes are rescaled to the range [0,2].
The total drop-count error-diffusion is a 5-level process with levels 0,1,2,3,4.

For any pixel, the output total drop count T is equal to the level closest to the modified total drop count for that pixel.
- If the output drop-count value is equal to 0, then no drop is put onto the pixel.
- If the output drop-count value is equal to 1, either a small drop of I₁ or a small drop of I₂ is placed resulting in a small colorant dot of either I₁ or I₂. The colour error-diffusion loop decides which of the two combinations is chosen. The colour having the largest modified pixel value is quantised to 1, the other colour is quantised to 0.
- If the output drop-count value is equal to 2, the colour error-diffusion loop chooses between three value combinations: two small drops on top of each other (one of I₁ and one of I₂), a large drop of I₁, or a large drop of I₂.
The above reasoning however reveals that the reproduction of the value combination I₁=1,I₂=1 is most susceptible to registration errors between the two ink planes. The current invention improves on the Vande Velde method (with respect to registration errors, but not with respect to graininess) by removing this combination from the set of possible output combinations, leaving only the value combinations less susceptible to registration error.
Before choosing the final value combination to reproduce the image a restrictions is applied by the halftoning process.

The colour error-diffusion loop decides which of the two remaining combinations is chosen. The colour having the largest modified pixel value is quantised to 2, the other colour is quantised to 0.
- If the output drop-count value is equal to 3, then two combinations of a small drop plus a large drop are possible. The colour having the largest modified pixel value is quantised to 2, the other colour is quantised to 1.
- If the output drop-count value is equal to 4, two large drops are printed on top of each other. Both colours are quantised to 2.

A more general procedure:
Suppose we have a system with N inks I₁,...,I_{N}, each having K dot sizes.
- The input pixel values of the individual colour planes are rescaled to the range [0,K].
- A critical dot size value C is chosen, below which no combinations with smaller dots of other colours will be allowed. (C=2 in the above example with 2 inks).
- The total drop count is a (N*K+1)-level process.
   The output total dot count is the integer value closest to the modified total drop count.
   Once the output total drop count T has been determined, the combination of inks is decided in the following way.
   1. The modified pixel values M₁,...,M_{N} of the N inks are sorted in descending order. We now let the index 1 stand for the colour with largest modified pixel value, index 2 for the colour with second largest modified pixel value, etc.
      The multilevel colorant value or drop count D₁ for the first (= having largest modified pixel value) ink is determined as the one closest to its modified pixel value M₁. If D₁<C, then D₁ is set to the value Minimum{C,T}. If D₁>T, D₁ is set equal to T.
   2. set j=1.
      Repeat
      T is set to T-Dⱼ and the drop count Dⱼ₊₁ for the next ink is determined as the one closest to its modified pixel value Mⱼ₊₁. If Dⱼ₊₁<C, then Dⱼ₊₁ is set to the value Minimum{C,T}.
      If Dⱼ₊₁>T, Dⱼ₊₁ is set equal to T.
      J=j+1.
      Until T=0. Yet unprocessed colour planes are quantised to zero drop count.

A numerical example: three inks C,M,Y, each having 4 drop sizes. As critical drop size we take 4 (the largest drop). Suppose that for a pixel the modified drop sizes are :
C = 2.7,
M = 2.8,
Y = 1.2.
The modified total drop count is then 2.7+2.8+1.2=6.7 and will be quantised to 7. We need to distribute 7 drops among C,M,Y. We start with ink M, which has the largest modified pixel value. The value 2.8 would normally be quantised to 3, but the critical drop size is equal to 4, so M is quantised to 4. We still need to distribute 7-4 = 3 drops among C and Y. The value of 2.7 is quantised to 3. The 7 drops are thus distributed and Y is then quantised to 0. The quantisation error to be distributed over future pixels is 2.8-4=-1.2 for M, 2.7-3=-0.3 for C, and 1.2-0=1.2 for Y.

It is however possible that not all colours have the same number of drop sizes.
Then another more general embodiment is needed:
Suppose we have a system with N inks I₁,...,I_{N}, having K₁,...,K_{N} drop sizes.
The input pixel values of the ith colour plane are rescaled to the range [0,Kᵢ].
Critical droplet sizes C₁,...,C_{N} are chosen for all colour planes, below which no combinations with smaller dots of other colours will be allowed.
   The total drop count is a (K₁+...+K_{N}+1)-level process.
The output total drop count is the integer value closest to the modified total drop count.
Once the total output drop count T has been determined, the combination of inks is decided in the following way.
   1. The modified pixel values M₁,...,M_{N} of the N inks are sorted such that Mᵢ/Kᵢ appear in descending order. We now let the index 1 stand for the colour with largest M/K ratio, index 2 for the colour with second largest M/K ratio, etc.
   2. The drop count D₁ for the first ink is determined as the one closest to its modified pixel value M₁. If D₁<C₁, then D₁ is set to the value Minimum{C₁,T}. If D₁>T, D₁ is set equal to T.
   3. set j=1.
      Repeat
      T is set to T-Dⱼ and the drop count Dⱼ₊₁ for the next ink is determined as the one closest to its modified pixel value Mⱼ₊₁. If Dⱼ₊₁<Cⱼ₊₁, then Dⱼ₊₁ is set to the value Minimum{Cⱼ₊₁,T}. If Dⱼ₊₁>T, Dⱼ₊₁ is set equal to T.
      j=j+1.
      Until T=0. Yet unprocessed colour planes are quantised to zero drop count.

Colour shifts due to misregistration of small dots will be less when already a large dot of another colour is present. When e.g. a large dot of magenta is placed on the pixel, we need not worry much about the overlap of small cyan and yellow dots on that same pixel.
Therefore, we might actually allow more dot-size combination than is the case in the previous embodiment.

Next possible embodiment:
Suppose we have a system with N inks I₁,...,I_{N}, having K₁,...,K_{N} drop sizes.
The input pixel values of the ith colour planes are rescaled to the range [0,Kᵢ].
Critical droplet sizes C₁,...,C_{N} are chosen for all colour planes, below which no combinations with smaller dots of other colours will be allowed.
The total drop count is a (K₁+...+K_{N}+1)-level process.
The output total drop count is the integer value closest to the modified total drop count.
Once the total output drop count T has been determined, the combination of inks is decided in the following way:
1. The modified pixel values M₁,...,M_{N} of the N inks are sorted such that Mᵢ/Kᵢ appear in descending order. We now let the index 1 stand for the colour with largest M/K ratio, index 2 for the colour with second largest M/K ratio, etc.
2. The drop count D₁ for the first ink is determined as the one closest to its modified pixel value. If D₁<C₁, then D₁ is set to the value Minimum{C₁,T}. If D₁>T, D₁ is set equal to T.
3. set j=1.
   Repeat
   T is set to T-Dⱼ and the drop count Dⱼ₊₁ for the next ink is determined as the one closest to its modified pixel value Mⱼ₊₁.
   If Dⱼ₊₁>T, Dⱼ₊₁ is set equal to T.
   j=j+1.
   Until T=0. Yet unprocessed colour planes are quantised to zero drop count.

Yet another possibility is to selectively allow combinations of small dots for second and third colour in function of the first colour. If the first colour is a dark one (e.g. cyan, magenta, black) we can allow small dots for both colour 2 and 3 (and 4), if the first colour is a light one (yellow, or possibly light cyan and light magenta) we forbid small-dot combinations of subsequent colours:
Step 3 of the above embodiment is then changed to:
3. set j=1.
   Repeat T is set to T-Dⱼ and the drop count Dⱼ₊₁ for the next ink is determined as the one closest to its modified pixel value Mⱼ₊₁. If j=1 and colour 1 is a light one and Dⱼ₊₁<Cⱼ₊₁, then Dⱼ₊₁ is set to the value Minimum{Cⱼ₊₁,T}. If Dⱼ₊₁>T, Dⱼ₊₁ is set equal to T.
   j=j+1.
   Until T=0. Yet unprocessed colour planes are quantised to zero drop count.

### Further possible embodiment

In an inkjet apparatus the mounting and positioning of a inkjet print head can have no important deviations causing colour reproduction instability. However it is possible that certain nozzles i,j,k as shown in (Fig. 6) show defects resulting in deviating dot position in the printed image. These imperfections due to defects in the print head give rise to misregistration of the printed dots and thus in local instability of colour reproduction of the original image. The deviating nozzles can be found in advance and special care is given to data recorded with these nozzles during halftoning.
The multilevel halftoning algorithm can be locally adjusted for the defective pixels recorded by nozzles i,j,k to avoid value combinations of multilevel colorant values resulting in colorant combinations of colorant dots giving rise to colour reproduction instability. In the unstable region overprints of small dots is restricted.
For the pixels having a perfect registration no such restriction in the halftoning algorithm has to be introduced.
The position of the nozzles used to reproduce the colorant pixel are taken into account when halftoning the input pixels.

### Embodiment of the invention in dye sublimation printing.

Thermal dye sublimation transfer or thermal dye diffusion transfer is a recording method in which a dye-donor element provided with a dye layer containing sublimable dyes having heat transferability is brought into contact with a receiver sheet or receiver element and selectivity, in accordance with a pattern information signal which is a function of the colorant values for the pixel to be printed, is heated by means of a thermal printing head provided with a plurality of juxtaposed heat-generating resistors, whereby dye is transferred from the selectively heated regions of the dye-donor element to the receiver sheet and forms a pattern thereon, the shape and density of which are in accordance with the pattern and intensity of heat applied to the dye-donor element and also in accordance with the colorant values.

A dye-donor element for use according to thermal dye sublimation transfer usually comprises a very thin support e.g. a polyester support, one side of which is covered with a dye layer comprising the printing dyes. The dye element can be a monochromic dye layer or it may comprise sequential repeating areas of differently coloured dyes e.g. dyes having a cyan, magenta, yellow, and optionally black hue. When a dye-donor element containing three or more primary colour dyes is used, a multicolour image can be obtained by sequentially performing the dye transfer process steps for each colour thus composing colorant pixels.
A primary coloured dye layer e.g. a magenta or cyan or yellow dye layer may comprise only one primary coloured dye (a magenta, cyan or yellow dye respectively) or may comprise a mixture or two or more primary colour dyes of the same hue (two magenta, two cyan or two yellow dyes respectively).

Any dye can be used in such a dye layer provided it is easily transferable to the dye-image-receiving layer of the receiver sheet or element by the action of heat.

However, by forming full colour dye images using a dye donor element comprising a repeating sequence of differently coloured dye layers (generally primary coloured) arranged in a predetermined order according to the above described method, the following problem arises.

In an image recording process for printing an image that consists of at least two primary colours on a receiving sheet, the image is separated in its composing (primary) colour separations. These different primary colour separations are then printed over each other using for each colour separation the corresponding coloured dye layer of the dye donor element. For example, if a full colour image is to be printed, at least the primary colours yellow, magenta and cyan are generally used. Accordingly, the full colour image will be separated in a yellow, magenta and cyan colour separations. In recording the full colour image, the first primary colour separation, generally the yellow part of the image, is printed on the receiving sheet using a yellow coloured dye layer comprising one or more yellow dyes. Subsequently, the magenta and cyan colour separations are printed on top of the printed yellow part of the image using respectively the magenta and cyan coloured dye layers. However, when printing a further colour separation on a previously recorded colour separation, dye printed in that previously printed part of the image partially transfer back from the receiving sheet to the dye donor element. For example, when recording first a yellow image and subsequently magenta and cyan, yellow dye will be transferred back to the dye donor element when recording the magenta part of the image and again when printing the cyan part of the image. Similarly, magenta dye will transfer back during printing of the cyan part of the image on the pre-recorded magenta parts of the image. This phenomenon is called inverse transfer or retransfer. This problem may cause falls colour renderings and/or reduce colour depth of the image.

The problem is most pronounced when printing black images or in black areas of a full colour image since yellow dye may retransfer in at least two subsequent printing passes, i.e. when printing magenta and cyan. As a result, the amount of yellow dye in the image will be too low and as a consequence the absorption in the blue part of the spectrum will be too low. Accordingly, the black image will not appear as neutral black but rather as a blueish black image. This problem is further amplified in full colour image when highly spectrally pure magenta and cyan dyes are used having little side absorption in the blue part of the spectrum to render brilliant appearing full colour images.
A mentioning of and possible solution to this problem of colour shift is found in EP-A-785087.

Another approach is to use the present invention to counteract the non-neutrality of the colour reproduction by avoiding value combinations during multilevel halftoning the input image. The value combinations most likely resulting in non-neutral colours of the colorant pixel are excluded or avoided in halftoning resulting in a better colour reproduction quality.
Thermal recording processes usually have the capability to reproduce a large number of grey scale values. The number of reproducible levels may vary from one process to another. The most important task is introducing the restriction needed to avoid the value combinations with unstable reproduction characteristics.

As certain variable parameters causing colour reproduction instability are well known and their influence on the colour reproduction can be easily derived. For some parameters and variabilities it is possible to calculate which value combinations corresponding to certain colorant combinations are to be avoided or excluded in the halftoning algorithm.

Other variable parameters are however not so clear or can not be isolated in advance and their influence on the colour reproduction process can not be easily predicted. In such case the value combinations to be avoided during halftoning the input image can be derived from measuring colour reproduction quality of a test image. Albeit it is not necessary to know the variable parameters which cause the colour reproduction instability. The value combinations to be avoided during halftoning can be empirically determined by printing test images. The causes of colour instability characteristics need not to be known, only the effect has to be taken into account.

It is clear to those skilled in the art that starting from these embodiments still other embodiments can be given and that the principle of not allowing all possible dot-size combinations can be implemented with other halftoning methods correlating the different colour planes.
Numerous modification can be made therein without departing from the scope of the invention as defined in the appending claims.

## Claims

1. A method for rendering a colour image, comprising colour pixels, by a printing apparatus capable of producing colorant dots of different dot sizes on a substrate, comprising the steps of :
- halftoning the colour image with a halftoning algorithm for obtaining a halftoned image, comprising for each colour pixel a value-combination of multilevel colorant values,
- recording said halftoned image on said substrate by said printing apparatus by recording colorant pixels using said multilevel colorant values , resulting for each colorant pixel in a colorant-combination of colorant dots, substantially in register, each colorant dot having a size corresponding to the multilevel colorant value,
**characterised in that** the halftoning algorithm restricts the possible value-combinations based upon colour instability characteristics due to printing process variability.

2. The method according to claim 1 wherein the colour instability is due to registration errors of the printed colorant dots.

3. The method according to any one of the preceding claims wherein the halftoning algorithm restricts the use of value combinations corresponding to colorant pixels having overlapping colorant dots wherein at least two colorant dots have a size smaller than a threshold value.

4. The method according to claim 3 wherein the halftoning algorithm restricts the use of value combinations corresponding to colorant pixels having overlapping colorant dots all having a size smaller than a threshold value.

5. The method according to any one of the preceding claims wherein the halftoning algorithm is error diffusion algorithm.

6. The method according to any one of the preceding claims wherein the halftoning algorithm is a two-step algorithm which first determines the sum of colorant values for all colours and then determines the individual colorant values.

7. The method according to any one of the preceding claims wherein said restricting is location dependent.

8. The method according to any one of the preceding claims wherein said restricting is colour dependent.

9. The method according to any one of the preceding claims wherein said printing apparatus is an inkjet printing apparatus. 10.Printing apparatus for rendering a colour image having colour pixels by recording colorant pixels on a substrate comprising:
- halftoning circuit for halftoning the colour image, obtaining for each colour pixel a value combination of multilevel colorant values,
- recorder for recording said multilevel colorant values combinations as colorant pixels having a colorant combination of colorant dots having a size corresponding to the colorant values,
**characterised in that** the halftoning circuit further comprises restriction circuit for restricting the possible obtained value combinations based upon colour reproduction instability caused by recording process variability.
